Europäisches Patentamt

European Patent Office

Office européen des brevets

(19)

(11) Veröffentlichungsnummer: **0 203 461**
**B1**

(12) **EUROPÄISCHE PATENTSCHRIFT**

(45) Veröffentlichungstag der Patentschrift:
**24.05.89**

(51) Int. Cl.⁴: **F16C 9/02**

(21) Anmeldenummer: **86106570.4**

(22) Anmeldetag: **14.05.86**

(54) **Kurbelwellenlager.**

(30) Priorität: **25.05.85 DE 3518948**

(43) Veröffentlichungstag der Anmeldung:
**03.12.86 Patentblatt 86/49**

(45) Bekanntmachung des Hinweises auf die Patenterteilung:
**24.05.89 Patentblatt 89/21**

(84) Benannte Vertragsstaaten:
**DE FR GB IT SE**

(56) Entgegenhaltungen:
**DE-A- 2 829 792**
**DE-B- 2 403 249**
**US-A- 4 293 170**

(73) Patentinhaber: **Adam Opel Aktiengesellschaft,**
**Bahnhofsplatz 1 Postfach 1560,**
**D-6090 Rüsselsheim(DE)**

(72) Erfinder: **Thaler, Konrad, Dipl.-Ing., Jugenheimer Weg 4,**
**D-6090 Rüsselsheim(DE)**

(74) Vertreter: **Spitzl, Karl et al, c/o Adam Opel AG**
**Patentabteilung Bahnhofsplatz 1 Postfach 1710,**
**D-6090 Rüsselsheim(DE)**

## Beschreibung

Die Erfinding bezieht sich auf ein Kurbelwellenlager mit einem Lagergehäuse, einem halbschalenförmigen Lagerdeckel, einem geteilten, aus zwei Radialgleitlagerhalbschalen gebildeten Radialgleitlager und mit entweder zweimal zwei Anlaufscheibensegmenten, von denen jeweils ein Anlaufscheibensegment an jeder Seite der Radialgleitlagerhalbschale im Lagergehäuse und jeweils ein Anlaufscheibensegment an jeder Seite des Lagerdeckels sitzt oder mit einmal zwei Anlaufscheibensegmenten, die entweder im Lagergehäuse oder im Lagerdeckel jeweils neben der dortigen Radialgleitlagerhalbschale angeordnet sind. Ein solches Kurbelwellenlager ist in der DE-C 26 35 061 beschrieben.

Das bekannte Kurbelwellenlager ist so ausgebildet, daß bei der Montage zunächst die Radialgleitlagerhalbschalen in die Lagergehäuse eingelegt werden. Dann wird die Kurbelwelle eingelegt. Anschließend werden die Anlaufscheibensegmente einrotiert. Dieser Montageablauf ist in der genannten DE-C 26 35 061 genau beschrieben. Eine automatische Montage ist bei der vorbekannten Kurbelwellenlagerausbildung wegen des notwendigen Einrotierens der Anlaufscheibensegmente nicht möglich. Will man automatisch montieren, dann müssen die Anlaufscheibensegmente bereits vor der Montage der Kurbelwelle in das Kurbelwellenlager eingesetzt werden. Wenn die Kurbelwelle fehlt, würden die Anlaufscheibensegmente jedoch nach der Seite herausfallen.

Die DE-A 21 40 845 beschreibt auch schon eine Lagerhälfte, welche aus einer Radialgleitlagerhalbschale und zwei Anlaufscheibensegmenten besteht. Die Anlaufscheibensegmente greifen mit Vorsprüngen in Schlitze der Radialgleitlagerhalbschale und werden dort durch Nasen gehalten. Auf diese Weise entsteht aus jeweils drei Einzel teilen eine Lagehälfte, die als Einheit montiert werden kann. In der Praxis hat es sich gezeigt, daß die Montage einer solchen Lagerhälfte zu Schwierigkeiten führt und es günstiger ist, die Anlaufscheibensegmente nicht an den Radialgleitlagerhalbschalen zu befestigen, sondern ausschließlich im Lagergehäuse zu haltern.

Der Erfindung liegt die Aufgabe zugrunde, ein Kurbelwellenlager der eingangs genannten Art derart zu gestal ten, daß die Anlaufscheibensegmente bereits vor dem Einsetzen der Kurbelwelle im Lagergehäuse montiert werden können.

Diese Aufgabe wird erfindungsgemäß dadurch gelöst, daß jedes Anlaufscheibensegment mit zumindest einem Ansatz in eine Hinterschneidung des Lagergehäuses eingreift und dadurch in axialer Richtung gehalten ist.

Durch diese einfache, erfindungsgemäße Maßnahme wird verhindert, daß die Anlaufscheibensegmente zur Seite hin wegkippen können. Sie sind deshalb auch vor dem Einsetzen der Kurbelwelle schon in ihrer richtigen Position neben der Radiallagerhalbschale gehalten. Deshalb entfällt der mit vertretbarem Aufwand nicht automatisch durchführbare Arbeitsaufwand des Einrotierens der Anlaufscheibensegmente, sodaß mit geringem Aufwand eine automatische Montage möglich wird.

Die Hinterschneidungen können auf einfache Weise durch Ausdrehen erzeugt werden, wenn jede Hinterschneidung jeweils durch eine radiale Nut in der Mantelfläche des Lagergehäuses beidseitig der Radialgleitlagerhalbschale gebildet ist.

Die Anlaufscheibensegmente selbst können ebenfalls sehr einfach gestaltet sein, vorzugsweise dadurch, daß sie jeweils mit einem durchlaufenden Ansatz an ihrer Außenmantelfläche in der radialen Nut sitzen.

Fertigungstechnisch besonders günstig ist es, wenn die Anlaufscheibensegmente durch mehrere Einkerbungen mehrere Ansätze haben, welche in die radiale Nut eingreifen.

Statt Einkerbungen können auch Einprägungen vorgesehen werden, die in die radiale Nut eingreifen.

Eine weitere vorteilhafte Ausführungsform besteht darin, daß jedes Anlaufscheibensegment im Lagertrennbereich an beiden Seiten jeweils einen radial nach außen gerichteten noppenförmigen Ansatz hat, welcher in eine entsprechende Hinterschneidung in der Mantelfläche des Lagergehäuses greift.

Die Hinterschneidungen können durch Fräsen auf einfache Weise erzeugt werden, wenn die noppenförmigen Ansätze bogenförmig und die Hinterschneidungen bogenförmige Einfräsungen im Lagertrennbereich sind.

Mehrere Ausführungen der Erfindung sind schematisch in der Zeichnung dargestellt und werden nachfolgend beschrieben. Die Zeichnung zeigt in

Fig. 1 eine Seitenansicht zweier erfindungsgemäß gestalteter Anlaufscheibensegmente,

Fig. 2 eine perspekt Darstellung eines Lagergehäuses eines erfindungsgemäßen Kurbelwellenlagers,

Fig. 3 einen Schnitt durch das Kurbelwellenlager im Bereich eines Anlaufscheibensegmentes bei eingesetztem Anlaufscheibensegment,

Fig. 4 einen Schnitt durch einen Teilbereich einer zweiten Ausführungsform eines erfindungsgemäßen Kurbelwellenlagers,

Fig. 5 eine teilweise Seitenansicht einer weiteren Ausführungsform eines Anlaufscheibensegmentes,

Fig. 6 eine Draufsicht auf den in der Figur 5 dargestellten Teilbereich eines Anlaufscheibensegmentes.

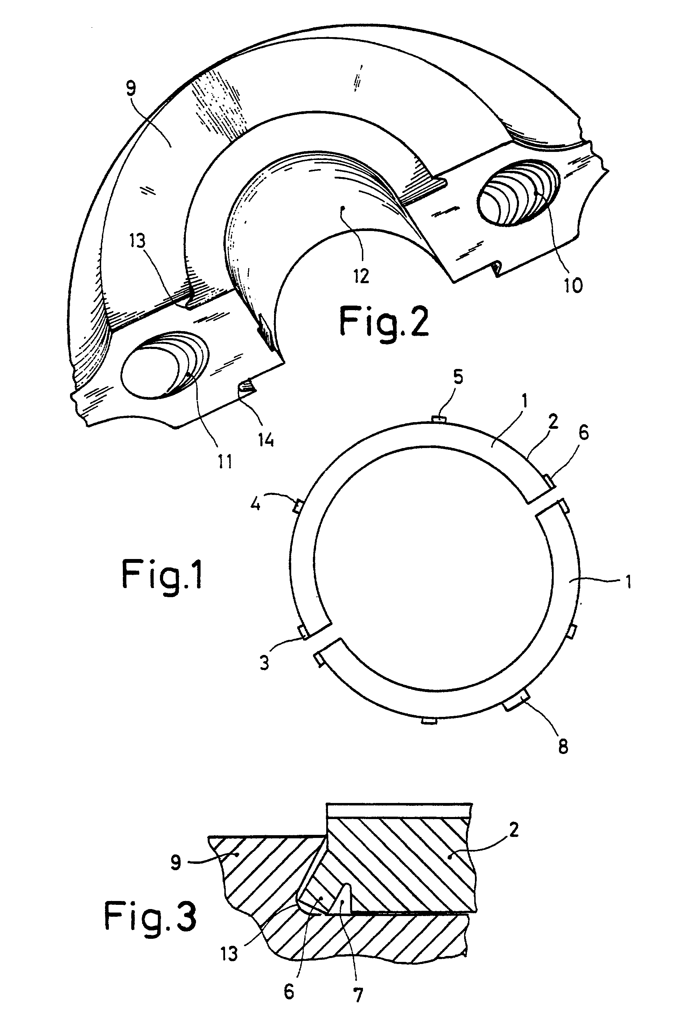

Die Figur 1 zeigt zwei Anlaufscheibensegmente 1 mit einer Außenmantelfläche 2, aus der radial heraus jeweils an vier Stellen ein Ansatz 3, 4, 5, 6 ragt. Wie die Figur 3 zeigt, sind diese Ansätze 3, 4, 5, 6 jeweils durch eine Kerbe 7 und anschließendes Wegdrücken eines Materialbereiches erzeugt. Die Figur 1 läßt desweiteren erkennen, daß das untere Anlaufscheibensegment eine ebenfalls radial nach außen ragende Verdrehsicherungslasche 8 hat. Auf diese Verdrehsicherungslasche 8 kann jedoch auch verzichtet werden, wenn das entsprechende Anlaufscheibensegment im Lagerdeckel vor Verdrehung gesichert wird.

Die Figur 2 zeigt ein Lagergehäuse 9, welches halbbogenförmig ausgedreht ist. Auf dieses Lagergehäuse 9 wird von oben her ein nicht dargestellter Lagerdeckel geschraubt. Zu erkennen sind zwei Gewindebohrungen 10, 11, in die nicht dargestellte Schrauben zur Befestigung des Lagerdeckels geschraubt werden. Ebenfalls nicht gezeigt ist eine Radialgleitlagerhalbschale, welche auf einer Lagerfläche 12 des Lagergehäuses 9 zu liegen kommt. Beidseitig der Lagerfläche 12 und damit der Radialgleitlagerhalbschale ist jeweils ein Anlaufscheibensegment 1 zu montieren. Zu diesem Zweck ist an jeder Seite der Lagerfläche eine Hinterschneidung in Form einer durchgehenden Nut 13, 14 vorgesehen. Die Anlaufscheibensegemente 1 können wegen der Ansätze 2-6 nur von oben her in die Nut 13 eingesetzt werden. Anschließend sitzen die Anlaufscheibensegmente 1 fest in diesen Nuten 13, 14 und können nicht zur Seite hin wegkippen, was in Figur 3 deutlich zu erkennen ist. Die Verdrehsicherungslasche 8 vermag im montierten Zustand in eine nicht gezeigte Ausnehmung des Lagergehäuses 9 zu greifen und dadurch das Anlaufscheibensegment 1 vor Verdrehen zu sichern.

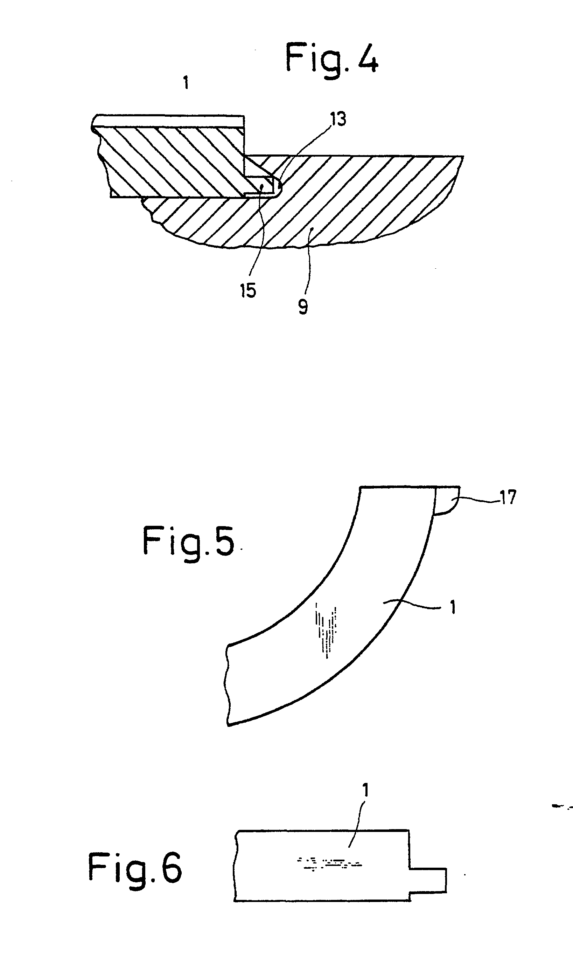

Statt einzelne Ansätze vorzusehen, kann man auch, was in der Figur 4 gezeigt ist, einen durchgehenden Ansatz 15 vorsehen, der genau wie die bisher erläuterten Ansätze in die durchgehende Nut 13 zu greifen vermag.

Bei der Ausführungsform gemäß der Figuren 5 und 6 ist an beiden Seiten des Anlaufscheibensegmentes 1 jeweils ein noppenförmiger Ansatz 17 vorgesehen, der nach unten hin bogenförmig ist und dadurch in eine entsprechende, nicht gezeigte, bogenförmige Ausfräsung des Lagergehäuses 9 zu gelangen vermag.

## Patentansprüche

1. Kurbelwellenlager mit einem Lagergehäuse (9), einem halbschalenförmigen Lagerdeckel, einem geteilten, aus zwei Radialgleitlagerhalbschalen gebildeten Radialgleitlager und mit entweder zweimal zwei Anlaufscheibensegmenten (1), von denen jeweils ein Anlaufscheibensegment (1) an jeder Seite der Radialgleitlagerhalbschale im Lagergehäuse (9) und jeweils ein Anlaufscheibensegment (1) an jeder Seite des Lagerdeckels sitzt oder mit einmal zwei Anlaufscheibensegmenten (1), die entweder im Lagergehäuse (9) oder im Lagerdeckel jeweils neben der dortigen Radialgleitlagerhalbschale angeordnet sind, dadurch gekennzeichnet, daß jedes Anlaufscheibensegment (1) mit zumindest einem Ansatz (3 - 6; 15, 17) in eine Hinterschneidung (Nuten 13, 14) des Lagergehäuses (9) eingreift und dadurch in axialer Richtung gehalten ist.

2. Kurbelwellenlager nach Anspruch 1, dadurch gekennzeichnet, daß die Hinterschneidung jeweils durch eine radiale Nut (13, 14) in der Mantelfläche des Lagergehäuses (9) beidseitig der Radialgleitlagerhalbschale gebildet ist.

3. Kurbelwellenlager nach den Ansprüchen 1 oder 2, dadurch gekennzeichnet, daß die Anlaufscheibensegmente (1) jeweils mit einem durchlaufenden Ansatz (15) an ihrer Außenmantelfläche in der radialen Nut (13, 14) sitzen.

4. Kurbelwellenlager nach einem oder mehreren der vorangehenden Ansprüche, dadurch gekennzeichnet, daß die Anlaufscheibensegmente (1) durch mehrere Einkerbungen (7) mehrere Ansätze (3 - 6) haben, welche in die radiale Nut (13, 14) eingreifen.

5. Kurbelwellenlager nach einem oder mehreren der vorangehenden Ansprüche, dadurch gekennzeichnet, daß die Anlaufscheibensegmente (1) mehrere Einprägungen (3 - 6) haben, die in die radiale Nut (13, 14) eingreifen.

6. Kurbelwellenlager nach einem oder mehreren der vorangehenden Ansprüche, dadurch gekennzeichnet, daß jedes Anlaufscheibensegment (1) im Lagertrennbereich an beiden Seiten jeweils einen radial nach außen gerichteten noppenförmigen Ansatz (17) hat, welcher in eine entsprechende Hinterschneidung in der Mantelfläche des Lagergehäuses (9) greift.

7. Kurbelwellenlager nach einem oder mehreren der vorangehenden Ansprüche, dadurch gekennzeichnet, daß die noppenförmigen Ansätze (17) bogenförmig und die Hinterschneidungen bogenförmige Einfräsungen im Lagertrennbereich sind.

## Claims

1. Crankshaft bearing with a bearing housing (9), a half shellshaped bearing cover, a split plain journal bearing composed of two half shells, and either with two sets of two contact disc segments (1), of which one (1) is seated on each side of the plain journal bearing half shell in the bearing housing (9) and one on each side of the bearing cover, or with one set of two contact disc segments (1) which are disposed either in the bearing housing (9) or in the bearing cover, in each case adjacent to the plain journal bearing half shell there, characterised in that each contact disc segment (1) engages by at least one attachment (3–6; 15, 17) in an undercut portion (grooves 13, 14) of the bearing housing (9) and is thereby held in the axial direction.

2. Crankshaft bearing according to claim 1, characterised in that each undercut portion is formed by a radial groove (13, 14) in the cylindrical surface of the bearing housing (9) on both sides of the plain journal bearing half shell.

3. Crankshaft bearing according to claim 1 or 2, characterised in that the contact disc segments (1) are in each case seated with a continuous attachment (15) on their outer cylindrical surface in the radial groove (13, 14).

4. Crankshaft bearing according to one or more of the preceding claims, characterised in that the contact disc segments (1), as a result of serveral notches (7), have several attachments (3–6) which engage in the radial groove (13, 14).

5. Crankshaft bearing according to one or more of the preceding claims, characterised in that the contact disc segments (1) have several stamped recesses (3–6) which engage in the radial groove (13, 14).

6. Crankshaft bearing according to one or more of the preceding claims, characterised in that each contact disc segment (1) has, on either side in the dividing zone of the bearing, a radially outwardly directed knob-like attachment (17) which engages in a corresponding undercut portion in the cylindrical surface of the bearing housing (9).

7. Crankshaft bearing according to one or more of the preceding claims, characterised in that the knob-like attachments (17) are arcuate and the undercut portions are arcuate milled regions in the dividing zone of the bearing.

**Revendications**

1. Palier de vilebrequin comprenant un corps (9), un chapeau en forme de demi-coquille, un palier lisse radial en deux parties formé par deux demi-coquilles de coussinet et comprenant soit deux fois deux segments de rondelle de butée (1) dont respectivement un segment (1) repose dans le corps (9) de chaque côté de la demicoquille du coussinet et respectivement un segment de chaque côté du chapeau, soit une fois deux segments qui sont disposés dans le corps (9) ou dans le chapeau respectivement à côté de la demi-coquille du coussinet qui y est installée, caractérisé par le fait que chaque segment de rondelle de butée (1) s'engage par au moins un appendice (3–6; 15, 17) dans une contre-dépouille (rainures 13, 14) du corps de palier (9) et est ainsi maintenu dans le sens axial.

2. Palier de vilebrequin selon la revendication 1, caractérisé par le fait que la contre-dépouille est respectivement formée par une rainure radiale (13, 14) pratiquée dans la surface latérale du corps (9) du palier des deux côtés de la demi-coquille du coussinet.

3. Palier de vilebrequin selon la revendication 1 ou 2, caractérisé par le fait que les segments de rondelle de butée (1) reposent respectivement dans la rainure radiale (13, 14) par un appendice continu (15) façonné sur leur surface latérale extérieure.

4. Palier de vilebrequin selon l'une ou plusieurs des revendications précédentes, caractérisé par le fait que les segments de rondelle de butée (1) comportent plusieurs appendices (3–6) qui sont réalisés à partir de plusieurs entailles (7) et qui s'engagent dans la rainure radiale (13, 14).

5. Palier de vilebrequin selon l'une ou plusieurs des revendications précédentes, caractérisé par le fait que les segments de rondelle de butée (1) comportent plusieurs estampages (3–6) qui s'engagent dans la rainure radiale (13, 14).

6. Palier de vilebrequin selon l'une ou plusieurs des revendications précédentes, caractérisé par le fait que chaque segment de rondelle de butée (1), des deux côtés de la zone de séparation du palier, comporte respectivement un appendice (17) en forme de bouton qui est disposé radialement vers l'extérieur et qui s'engage dans une contre-dépouille correspondante de la surface latérale du corps (9) du palier.

7. Palier de vilebrequin selon l'une ou plusieurs des revendications précédentes, caractérisé par le fait que les appendices (17) en forme de boutons sont arqués et que les contre-dépouilles sont des fraisures arquées pratiquées dans la zone de séparation du palier.

9

13

12

10

Fig.2

11          14

5        1        2        6

4

Fig.1

3                    1

8

9        2

Fig.3

13

6      7

## Fig. 4

## Fig.5.

## Fig.6